# EUROPÄISCHE PATENTANMELDUNG

(11) **EP 1 120 041 A1**
(43) Veröffentlichungstag der Anmeldung: **01.08.2001**
(21) Anmeldenummer: 00101578.3
(22) Anmeldetag: 27.01.2000
(51) Int. Cl.: A21B 5/02, A21B 3/13

(54) **Verfahren und Backautomat zur Herstellung von Waffelblättern**

(71) Anmelder: G.A.M Gesellschaft für Anlagen- Maschinenbau und Service mbH, 45481 Mülheim an der Ruhr (DE)
(72) Erfinder:
(74) Vertreter: Nunnenkamp, Jörg, Dr.

(57) **Zusammenfassung**

Es handelt sich um ein Verfahren sowie einen Backautomaten zur Herstellung von Waffelblättern (W). Dabei wird eine vorbestimmte Menge an Teig in einer geschlossenen Backform erhitzt. Erfindungsgemäß wird jedes Waffelblatt (W) mit definierter Außenkontur gepresst gebacken. Zu diesem Zweck wird die Außenkontur im wesentlichen durch eine das Waffelblatt (W) nahezu vollständig umschließende Anlauf-Formkante (4) festgelegt.

## Beschreibung

Die Erfindung betrifft ein Verfahren zur Herstellung von Waffelblättern, wonach eine vorbestimmte Menge an Teig in einer geschlossenen Backform erhitzt wird.

Ein derartiges Verfahren ist aus der Praxis sowie der Literatur bekannt (vgl. DE 36 02 206, DE 40 17 727, EP 0 484 670und WO 97/48282). Dabei wird üblicherweise so vorgegangen, dass die vorbestimmte Menge an Teig in einer Teigeinfüllstation bzw. im Bereich einer Teigaufgabe in die zumeist zweiteilige Backform eingefüllt wird. Nach Schließen dieser Backform und Erhitzen erfolgt ein gleichsam "freies Backen", das heißt der in die Backform eingefüllte Teig kann sich grundsätzlich nach allen Seiten in dieser Backform ausdehnen. Die Außenkontur des solchermaßen hergestellten Waffelblattes ist also grundsätzlich unbestimmt, wenngleich man natürlich durch eine entsprechende Mengenaufgabe und ggf. eingebrachte Anschläge dafür sorgen kann, dass dieses Waffelblatt in bestimmten Grenzen eine gewünschte Form aufweist.

Derartige Waffelblätter können beispielsweise zu gedrehten Waffeltüten, Waffelrollen, gepressten Waffelschalen oder Rundwaffelgebäck weiterverarbeitet werden. Dabei liegt es selbstverständlich im Rahmen der Erfindung, auf zuckerhaltige Waffelblätter mit oder ohne Abschlusskragen sowie verschiedenen Gravuren zurückzugreifen. Ebenso kann den beschriebenen Herstellungsschritten ein Wickelverfahren nachgeordnet werden, mit dessen Hilfe Waffeltüten gewünschten Durchmessers und vorgegebener Konizität gewickelt werden können. - Üblicherweise werden die Waffelblätter nach dem Backen jedoch in Magazinen konfektioniert und den gewünschten Weiterverarbeitungsschritten zugeführt.

Die bisher bekannten Vorgehensweisen können nicht in allen Punkten befriedigen. So eignen sich derartige Waffelblätter auch dazu, zu gleichsam U-förmigen Klammern umgebogen zu werden, welche zum Beispiel Speiseeis zwischen sich aufnehmen (vgl. DE 197 37 180 bzw. WO 98/09528). Dies hat natürlich zur Folge, dass die Außenkontur des Waffelblattes gleichsam rundherum beim fertigen Produkt zu sehen ist, was beispielsweise bei einer Waffeltüte nur eingeschränkt der Fall ist. Jedenfalls stößt das zuvor beschriebene "freie Backen" insbesondere bei der Verwendung von Waffelblättern in der skizzierten Art und Weise an Grenzen. Denn vom ästhetischen Aspekt her wünscht sich ein Konsument eine mehr oder minder geradlinige Begrenzung des Waffelblattes, insbesondere ohne "Ausfransungen". Dies ist mit den bekannten Vorgehensweisen nicht zu erreichen. Hier will die Erfindung insgesamt Abhilfe schaffen.

Der Erfindung liegt das technische Problem zugrunde, ein Verfahren zur Herstellung von Waffelblättern anzugeben, mit dessen Hilfe sich fest umrissene Waffelblätter produzieren lassen. Außerdem soll ein hierzu besonders geeigneter Backautomat angegeben werden.

Zur Lösung dieser Aufgabe schlägt die Erfindung bei einem gattungsgemäßen Verfahren zur Herstellung von Waffelblättern vor, dass jedes Waffelblatt mit definierter Außenkontur gepresst gebacken wird, wobei die Außenkontur im wesentlichen durch eine das Waffelblatt nahezu vollständig umschließende Anlauf-Formkante festgelegt wird. Diese Anlauf-Formkante dient also als Begrenzung für den in der Backform befindlichen Teig. Dieser kann sich im Zuge des Schließens und Backens in der Backform folglich nur noch bis zu der betreffenden Anlauf-Formkante ausdehnen. Ein "freies Backen" findet also nicht (mehr) statt.

Dabei muss im Rahmen der Erfindung dafür gesorgt werden, dass während des Backvorganges ggf. entstehende Fluide durch wenigstens eine Fluidöffnung in der Anlauf-Formkante entweichen können. Bei diesen Fluiden handelt es sich in der Regel um Wasserdampf, welcher aus dem Teig im Zuge des Backens entweicht. Selbstverständlich können hiermit auch beim Erhitzen freiwerdende Gase (beispielsweise Kohlendioxid) gemeint sein. Jedenfalls weist die beschriebene Anlauf-Formkante zumindest eine Durchbrechung in Form der Fluidöffnung auf, um das beschriebene Entweichen von Wasserdampf oder Gas zu ermöglichen. Beim Stand der Technik treten derartige Phänomene schon vom Ansatz her nicht auf, weil eine das entstehende Waffelblatt nahezu vollständig umschließende Anlauf-Formkante fehlt und folglich entstehende Fluide über die gesamte Außenkontur entweichen können.

Infolge der beschriebenen Fluidöffnung bzw. Durchbrechung der Anlauf-Formkante kann es im Rahmen der Erfindung passieren, dass in die Backform eingefüllter Teig in diese Fluidöffnung ggf. ausweicht. Dieser, sogenannte Waffellappen bildende, Teig sollte nach seiner Erhärtung entfernt werden, sofern das Waffelblatt für die Herstellung eines Produktes eingesetzt wird, bei welchem die gesamte Außenkontur sichtbar ist. Selbstverständlich kann auf ein Abtrennen der Waffellappen auch verzichtet werden, sofern beispielsweise aus den Waffelblättern ein Waffelhörnchen oder eine Waffelrolle oder auch ein Becher im Anschluss hieran produziert werden.

Sofern jedoch der zumindest eine Waffellappen an dem Waffelblatt abgetrennt wird, schlägt die Erfindung vor, diese überschüssige Waffelmasse abzusaugen und ggf. zu zerkleinern. Dies kann selbstverständlich unter lebensmittelhygienisch einwandfreien Bedingungen erfolgen, so dass die hierbei gewonnene Waffelmasse verlustfrei wieder aufbereitet werden kann. Denkbar ist es hierbei, diese der Teigmasse wieder zuzuführen oder einer anderen Verwendung zukommen zu lassen.

Damit die gebackenen Waffelblätter einwandfrei konfektioniert und ggf. gestapelt werden können, wird im Rahmen der Erfindung angeregt, die gebackenen und optional zugeschnittenen Waffelblätter ober- und unterseitig einzuspannen. Auf diese Weise lassen sich die Waffelblätter beschädigungsfrei einer Weiterverarbeitung im Zuge eines Transportes zuführen.

Im Ergebnis überzeugt das beschriebene Verfahren zunächst einmal durch eine einfache Vorgehensweise, weil im Vergleich zum Stand der Technik keine zusätzlichen Verfahrensschritte verfolgt werden. Dabei zeichnet sich das gewonnene Endprodukt - die Waffelblätter - durch eine einwandfreie Außenkontur aus, die letztlich darauf zurückzuführen ist, dass der in die Backform eingefüllte Teig sich nicht mehr frei ausdehnen kann, sondern dessen Fließverhalten durch die Anlauf-Formkante begrenzt wird.

Diese umschließt das jeweilige Waffelblatt nahezu vollständig, wobei eine Unterbrechung der Anlauf-Formkante regelmäßig die Funktion einer Fluidöffnung übernimmt. Das heißt, die Anlauf-Formkante ist lediglich aus dem Grund unterbrochen, um beim Backprozess entstehende Fluide bzw. Gase frei entweichen lassen zu können.

Jedenfalls überzeugt das solchermaßen hergestellte Produkt durch eine besondere Homogenität, weil der zumeist dünne Randbereich eines Waffelblattes gleichsam entfällt. Im übrigen wird die Außenkontur einwandfrei definiert und weist insbesondere keine Zacken, Grate oder dergleichen mehr auf. Das optische Erscheinungsbild ist also einwandfrei. Schließlich lässt sich überschüssige Waffelmasse problemlos aufbereiten bzw. dem Herstellungsprozess wieder zuführen, so dass besonders kostengünstig gearbeitet werden kann. Hierin sind die wesentlichen Vorteile der Erfindung zu sehen.

Zum Erfindungsgegenstand gehören auch ein Backautomat, wie er in den Ansprüchen 6 bis 9 beschrieben ist sowie ein Waffelblatt, welches nach dem vorgenannten Verfahren hergestellt wurde.

Im folgenden wird die Erfindung anhand einer lediglich ein Ausführungsbeispiel darstellenden Zeichnung näher erläutert; es zeigen:
- Fig. 1: die Unterform der zweiteiligen Backform,
- Fig. 2: die zugehörige Oberform ,
- Fig. 3: eine perspektivische Ansicht des erfindungsgemäßen Backautomaten im Bereich der Sägestation,
- Fig. 4: den Gegenstand nach Fig. 3 in Aufsicht und
- Fig. 5: eine Seitenansicht des Gegenstandes nach Fig. 3 aus Richtung X.

In den Figuren ist ein vollautomatischer Backautomat dargestellt, welcher zur Herstellung von Waffelblättern W aus einer vorbestimmten Menge an Teig geeignet ist. Dieser Teig wird in eine Backform 1 im Bereich einer Teigaufgabe eingefüllt. Zu diesem Zweck dient eine nicht dargestellte Teigeinfülleinrichtung, wie sie grundsätzlich bekannt ist.

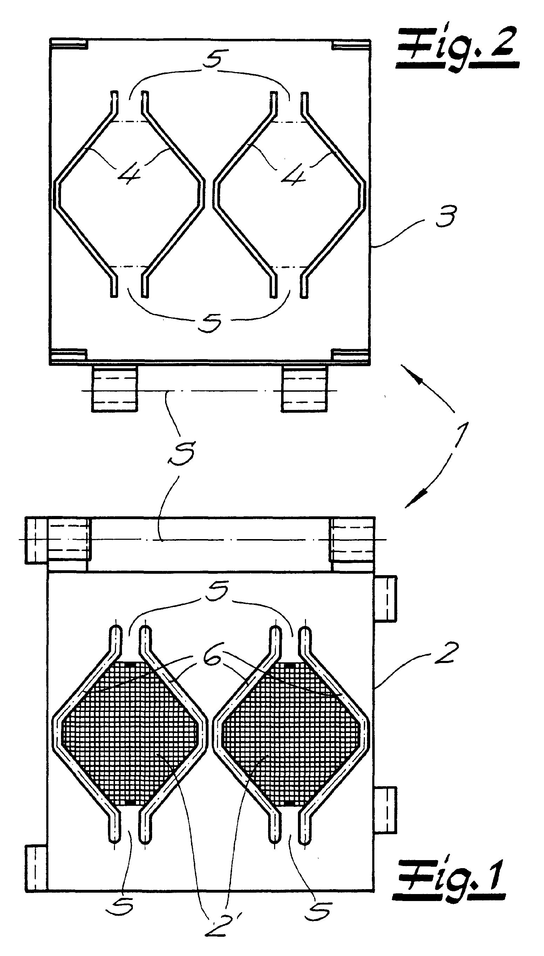

Im einzelnen wird der Teig auf eine Unterform 2 aufgegeben, und zwar im Bereich einer dort schraffiert dargestellten Gravur 2'. Vorliegend sind zwei Gravuren 2' verwirklicht, so dass sich mit der dargestellten Unterform 2 zwei Waffelblätter in einem Arbeitsgang herstellen lassen. Zu dieser in Fig. 1 dargestellten Unterform 2 gehört eine Oberform 3, welche Gegenstand der Fig. 2 ist. Unterform 2 und Oberform 3 sind über ein Scharniergelenk S klappbar miteinander verbunden und bilden in geschlossenem Zustand die bereits beschriebene (zweiteilige) Backform 1.

Jedes Waffelblatt W kann mit definierter Außenkontur in der Backform 1 gepresst gebacken werden. Dies gelingt dadurch, dass die Außenkontur des Waffelblattes W im wesentlichen durch eine das Waffelblatt W nahezu vollständig umschließende Anlauf-Formkante 4 festgelegt wird. Diese Anlauf-Formkante 4 ist im Rahmen des Ausführungsbeispieles an die Oberform 3 angeformt. Selbstverständlich kann auch die Unterform 2 mit einer entsprechenden Anlauf-Formkante 4 ausgerüstet sein. Auch ist eine getrennte Ausbildung von einerseits Unterform 2 und Oberform 3 sowie andererseits Anlauf-Formkante 4 denkbar. Nach dem Ausführungsbeispiel bilden jedoch Oberform 3 und Anlauf-Formkante 4 eine einstückige Baueinheit. Diese wird so hergestellt, dass die Oberform 3 inklusive Anlauf-Formkante 4 aus dem Vollen gefräst wird. Beide Formen 2, 3 werden jeweils aus einem Stahlgussrohling produziert.

Im Rahmen des dargestellten Beispiels ist die Anlauf-Formkante 4 rautenförmig und zweiteilig gestaltet und weist zwei gegenüberliegende Fluidöffnungen bzw. Durchbrechungen 5 auf (vgl. Fig. 2). Selbstverständlich liegen auch andere Außenformen der Anlauf-Formkante 4 im Rahmen der Erfindung. Bei der Anlauf-Formkante 4 handelt es sich in Seitenansicht um einen abgerundeten Rechtecksteg, welcher bei geschlossener Backform 1 in ein komplementär gestaltetes Formnest 6 eintaucht. Selbstverständlich sind vorliegend zwei Formnester 6 realisiert - entsprechend den beiden Anlauf-Formkanten 4 (vgl. Fig. 1 und 2). Auch findet sich eine mit den Fluidöffnungen 5 deckungsgleiche Unterbrechung der Formnester 6.

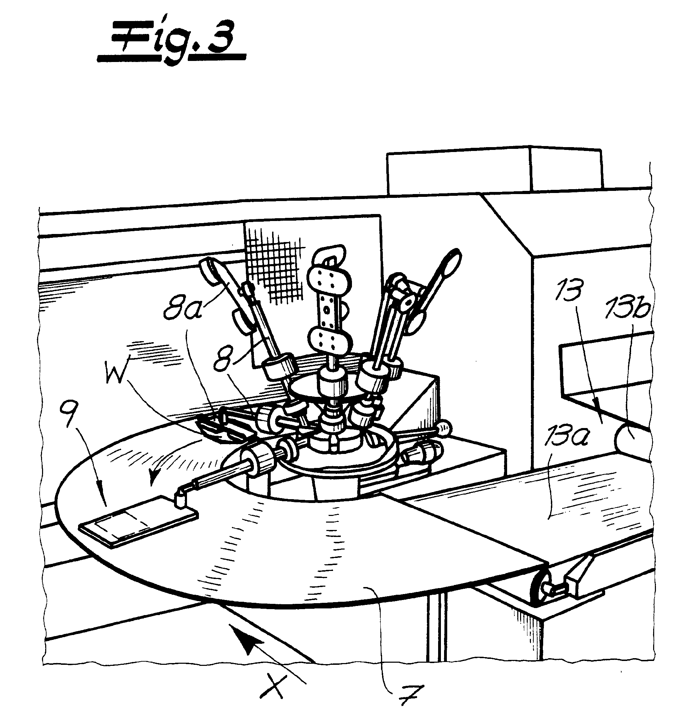

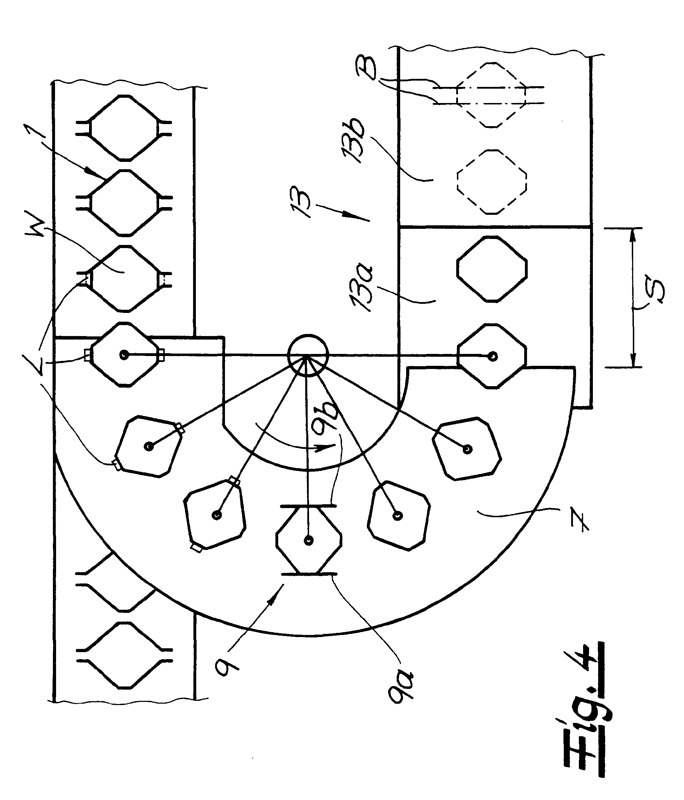

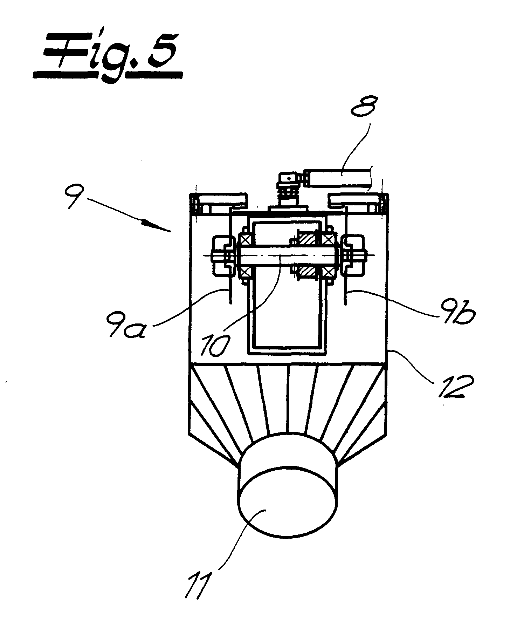

Anhand der Fig. 3 und 4 erkennt man, dass die gebackenen Waffelblätter W im Anschluss an den Backvorgang halbkreisförmig weitertransportiert werden, und zwar über einen Halbkreisrutschtisch 7. Dieser Transport erfolgt dergestalt, dass in Fig. 3 hochgestellte Arme 8 mit Greifern 8a auf die jeweiligen Waffelblätter W abgesenkt werden und für die in Fig. 4 angedeutete rotative Weiterbewegung sorgen. Im Scheitel dieses Halbkreisrutschtisches 7 ist eine Sägestation 9 vorgesehen. Diese ist im Detail in der Fig. 5 dargestellt. Zu der Sägestation 9 gehören im wesentlichen zwei Kreissägen 9a, 9b, welche um eine gemeinsame Achse 10 rotieren.

Mit Hilfe der Sägestation 9 bzw. der Kreissägen 9a, 9b lassen sich überstehende Waffellappen L der Waffelblätter W entfernen. Diese Waffellappen L (vgl. Fig. 4) entstehen beim Backen dadurch, dass der in die Unterform 2 eingefüllte Teig ggf. in die Fluidöffnungen 5 ausweicht. Jedenfalls sorgt die hier vorhandene Durchbrechung bzw. Fluidöffnung 5 für die Entstehung der Waffellappen L, die im Rahmen des Ausführungsbeispieles mit Hilfe der Sägestation 9 entfernt werden.

Die bei diesem Trennvorgang entstehende überschüssige Waffelmasse wird mit Hilfe eines Gebläses 11 abgesaugt sowie zerkleinert. Folglich lässt sich diese Waffelmasse ohne weiteres einer Weiterverarbeitung zuführen, weil insofern der gesamte Vorgang in einem geschlossenen Gehäuse 12 vonstatten geht.

Im Anschluss an die Sägestation 9 findet sich darüber hinaus eine Transporteinrichtung 13, die besonders in den Fig. 3 und 4 zu erkennen ist. Diese Transporteinrichtung 13 setzt sich im wesentlichen aus einem unten liegenden Transportband 13a und einem darüber befindlichen Fixierungs-bzw. Formstabilisierungsband 13b zusammen. Dabei werden zunächst die von den Waffellappen L befreiten Waffelblätter W mit Hilfe der Ausleger 8 auf das Transportband 13a abgelegt, von wo aus sie weitertransportiert werden. Nach einer Strecke S werden dann die Waffelblätter W zwischen dem Transportband 13a und dem Formstabilisierungsband 13b eingeklemmt, so dass eine Stabilisierung erreicht wird. Außerdem können auf diese Weise randseitige Hochbiegungen der Waffelblätter W vermieden werden. Gleichzeitig besteht die Möglichkeit, die Waffelblätter W unter Umständen zu kühlen, indem das Transportband 13a auf entsprechende Temperaturen gebracht wird.

Im Anschluss an die Transporteinrichtung 13 werden die Waffelblätter W beispielsweise in nicht dargestellten Magazinen konfektioniert. Daneben ist es im Rahmen der Erfindung denkbar, die mit einer rautenartigen Außenkontur hergestellten Waffelblätter zweifach zu biegen. Dies kann entlang von parallelen Biegelinien B erfolgen, die in Fig. 4 angedeutet sind. Sofern die Biegung jeweils in die gleiche Richtung erfolgt, lässt sich auf diese Weise eine U-förmige Klammer aus den Waffelblättern W produzieren. Dabei kann zwischen die solchermaßen entstehenden U-Schenkel - gestützt von der U-Basis - Speiseeis eingefüllt werden, so dass insgesamt ein fertiges Eiserzeugnis vorliegt. Dieses kann verzehrt werden, in dem die U-förmige Klammer aus dem jeweiligen Waffelblatt W beim Genuss ergriffen wird.

Die erforderliche Aufweichung der Waffelblätter W vor dem Biegevorgang kann durch Benetzen mit Flüssigkeit (Wasser) oder Erwärmen (Infrarotstrahlung, Mikrowellen) erfolgen, wie dies ansatzweise bekannt ist (vgl. DE-OS 197 37 180 bzw. US-PS 4 153 733).

## Patentansprüche

1. Verfahren zur Herstellung von Waffelblättern (W), wonach eine vorbestimmte Menge an Teig in einer geschlossenen Backform (1) erhitzt wird, **dadurch gekennzeichnet**, dass jedes Waffelblatt (W) mit definierter Außenkontur gepresst gebacken wird, wobei die Außenkontur im wesentlichen durch eine das Waffelblatt (W) nahezu vollständig umschließende Anlauf-Formkante (4) festgelegt wird.

2. Verfahren nach Anspruch 1, dadurch gekennzeichnet, dass während des Backvorganges ggf. entstehende Fluide durch wenigstens eine Fluidöffnung (5) in der Anlauf-Formkante (4) entweichen.

3. Verfahren nach Anspruch 1 oder 2, dadurch gekennzeichnet, dass in die Fluidöffnung (5) unter Umständen ausweichender Teig nach seiner Erhärtung vom übrigen Waffelblatt (W) entfernt wird.

4. Verfahren nach einem der Ansprüche 1 bis 3, dadurch gekennzeichnet, dass überschüssige Waffelmasse abgesaugt und ggf. zerkleinert wird.

5. Verfahren nach einem der Ansprüche 1 bis 4, dadurch gekennzeichnet, dass die gebackenen und optional zugeschnittenen Waffelblätter (W) ober- und unterseitig eingespannt zur Weiterverarbeitung, insbesondere zum Konfektionieren, transportiert werden.

6. Backautomat, insbesondere vollautomatischer Backautomat, zur Durchführung des Verfahrens nach einem der Ansprüche 1 bis 5, mit einer Backform (1) aus zumindest einer Oberform (3) und einer Unterform (2), und mit einer Teigeinfüllstation, **dadurch gekennzeichnet**, dass die Oberform (3) und/oder die Unterform (2) die Anlauf-Formkante (4) aufweisen.

7. Backautomat nach Anspruch 6, dadurch gekennzeichnet, dass die Anlauf-Formkante (4) bei geschlossener Backform (1) in ein komplementär gestaltetes Formnest (6) eintaucht.

8. Backautomat nach Anspruch 7 oder 8, dadurch gekennzeichnet, dass der Backform (1) eine Sägestation (9) mit vorzugsweise zwei Kreissägen (9a, 9b) zur Entfernung überstehender Waffellappen (L) nachgeschaltet ist.

9. Backautomat nach einem der Ansprüche 6 bis 8, dadurch gekennzeichnet, dass eine Transporteinrichtung (13) mit zwei übereinander angeordneten Transportbändern (13a, 13b) zur Förderung und Stabilisierung der gebackenen Waffelblätter (W) vorgesehen ist.

10. Waffelblatt (W), welches nach dem Verfahren gemäß einem der Ansprüche 1 bis 5 hergestellt worden ist, mit einer vorzugsweise rautenartigen Außenkontur, wobei das Waffelblatt (W) zur Aufnahme von beispielsweise Speiseeis entlang von parallelen Biegelinien (B) U-klammerartig gebogen ist.
